# NEW EUROPEAN PATENT SPECIFICATION

(11) **EP 3 444 974 B2**
(45) Date of publication and mention of the opposition decision: **11.06.2025**
(45) Mention of the grant of the patent: 29.06.2022
(21) Application number: 17195598.2
(22) Date of filing: 10.10.2017
(51) Int. Cl.: H04L 47/30, H04L 47/22, H04J 3/06

(54) **SYSTEM AND METHOD FOR DELAY COMPENSATION FOR AIR TRAFFIC CONTROL**
SYSTEM UND VERFAHREN ZUR VERZÖGERUNGSKOMPENSATION FÜR LUFTVERKEHRSKONTROLLE
SYSTÈME ET PROCÉDÉ DE COMPENSATION DE RETARD POUR LA RÉGULATION DE LA CIRCULATION D'AIR

(30) Priority: 18.08.2017 EP 17186793
(43) Date of publication of application: 20.02.2019
(73) Proprietor: Rohde & Schwarz GmbH & Co. KG, 81671 München (DE)
(72) Inventor: PATRU, Eugen, 014142 Bucharest (RO); BICA, Dumitru, 041377 Bucharest (RO); ZAHARIA, Nicolae, 505800 Zarnesti District Brasov (RO); TURLEA, Cristian, 014142 Bucharest (RO)
(74) Representative: Rupp, Christian

(56) References cited:
- US-A1- 2004 076 191
- US-A1- 2010 278 140
- US-B1- 7 058 568
- US-B2- 8 085 678

## Description

The invention relates to a transmission system with data packet transport, especially for Internet Control (IP), and delay compensation. Especially, the invention encompasses a transmission system and a transmission method for this purpose.

In order to be able to send data, especially audio and or video data from a control working position via a communication switch and via a ground radio station to a certain region or a certain control sector, one ground radio station that transmits the data via an antenna to a receiving object, might not be sufficient. Thus, several independent ground radio stations are used. The ground radio stations receive data packets, especially for IP packets, transmitted from the communication switch over a transport network, process and transmit the information via an antenna. Since several ground radio stations are present, time delay differences in ground-ground transmission for the different radio ground stations have to be compensated to avoid echos.

The US patent US 8,085,678 B2 is related to wireless communications and to the removal of jitter from wireless communications and discloses a method for adapting a de-jitter buffer for voice communications. The described method comprises the step of detecting a change in a characteristic of an air link, the further step of predicting a future packet delay based on the change in the air link characteristic and the step of adapting the de-jitter buffer based on the predicted future packet delay.

The US 2004/076191 A1 discloses a method for controlling a jitter buffer and a communication apparatus implementing the method and functioning as a first node of a communication system, wherein the jitter butter is adapted to buffer a stream of blocks of compressed speech information generated in a second node in the communication system, transmitted to and received in the first node. Blocks of compressed speech information in said stream of blocks are selected according to a predetermined rule based on the current buffering delay of the jitter buffer and at least one characteristic of said blocks of compressed speech information. Predetermined actions aiming at reducing buffering delay in the jitter butter are applied to the selected blocks.

Even though, the cited document is related to data packets transmitted over a network, received by a receiver and processed by a de-jitter buffer to prevent jitter, the presented method is disadvantageous, since it is not related to time delay differences in ground-ground transmission. However, the consideration of the time delay differences is critical to ensure that several independent ground radio stations operating at the same frequency can be operated simultaneously without echo effects.

The object of the invention is to provide a transmission system and a transmission method, which allow a communication from a control working position to a receiving object by using several independent ground radio stations operating simultaneously at the same frequency without echo effects. Instead of the wording ground radio station the expression ground station is used in the following having the identical meaning as ground radio station.

The object is solved by the features of the independent claims. Dependent claims contain further developments. According to a first aspect of the invention, a transmission system with data packet transport and delay compensation comprising a communication switch including a packing unit configured to convert a digital sample stream into data packets according to claim 1 is provided. Furthermore, the transmission system consists of a ground radio station including at least one jitter buffer receiving the data packets transmitted from the communication switch, wherein at least one data packet includes a delay command, and wherein the delay command is processed in the jitter buffer to adjust a jitter buffer delay (Td1). Furthermore, the ground radio station includes at least one radio frequency (RF) unit with an antenna. It is thereby possible to easily adjust a jitter buffer delay time (Tdl) for the ground-ground transmission for each ground radio station. Advantageously, time delay differences between different ground radio stations related to ground-ground transmission can be adjusted to ensure that several independent ground stations operating at the same frequency can be operated simultaneously without echo effects. The digital sample stream may preferably be converted into internet protocol (IP) packets, however any data packets related to packet-orientated communication are conceivable.

According to a first preferred implementation form of the first aspect, the communication switch is connected to or includes capture means, configured to convert an input signal into a digital sample stream. The signal to be converted is preferably an audio and/or video signal.

According to a second preferred implementation form of the first aspect, the delay command is calculated based on an estimated end to end data delay between the capture means and the output of the radio frequency unit. The consideration of the overall delay time from capturing a signal to the output point of the signal is especially advantageously for simultaneous voice transmission over more than one ground radio station, since time delay differences cause echos.

The delay command is based on Global Positioning System (GPS) data of the object that shall receive the radio frequency transmission of the radio frequency unit. The addition of Global Positioning (GPS) data as parameter for the generation of the delay command , advantageously allows to fine-tune the jitter buffer delay time (Tdl, Tdl') for each independent ground radio station.

According to a further preferred implementation form of the first aspect, the jitter buffer is configured to convert the received data packets into a digital sample stream. Advantageously, the jitter buffer generates a digital sample stream from the received data packets and processes the delay command included in at least one of the data packets to control the output delay (Tdl) of the digital sample stream. Thus, no additional delay line is required to achieve the desired delay (Tdl, Td1'). Advantageously, the jitter buffer (70, 70') can perform the task of restoring the digital data stream that has been packed into the data packets and control the output of the restored digital data stream to achieve a time delay (Tdl, Tdl') based on a control signal, a so-called delay command, that is included into at least one data packet.

According to a further preferred implementation form of the first aspect, the radio frequency unit converts the received digital data stream into signals that are transmittable by the antenna.

According to a further preferred implementation form of the first aspect, the system comprises a packet transport network configured to provide data packet transmission between the communication switch and at least one ground radio station. Advantageously the use of data packet transmission does not require analog phone lines or specific digital transmission lines such as Plesiochrone Digital Hierarchy (PDH) and Synchrone Digital Hierarchy (SDH).

According to a further preferred implementation form of the first aspect, the data packet transport network uses an internet protocol and/or the digital sample stream comprises sampled voice and/or video data.

According to a further preferred implementation form of the first aspect, the sum of the jitter buffer delay time (Tdl, Tdl') and the delay time (Ts1, Ts1') between jitter buffer output and the antenna is constant for each ground radio station.

According to a second aspect of the invention, a method for transmission with data packet transport and delay compensation according to claim 8 is provided. The method comprises the step of packing a digital sample stream into data packets with the aid of a packing unit located inside a communication switch, wherein at least one data packet includes a delay command. Furthermore, the method includes the step that a jitter buffer located in a ground radio station receives the data packets that were sent by the packing unit. Moreover, according to the described method, a digital sample stream is generated from the received data packets and a jitter buffer delay (Tdl) based on the delay command is adjusted with the aid of the jitter buffer. The method further includes, sending the delayed digital sample stream to at least one radio frequency (RF) unit with the aid of the jitter buffer, and processing the received digital sample stream such that it is transmittable via an antenna with the aid of the at least one radio frequency (RF) unit. Advantageously, the jitter buffer does re-order the received data packets and generates a digital data stream. In other words, it restores the digital data stream that has been transmitted as data packets and additionally controls the output delay (Tdl, Tdl') of the restored data stream depending on the delay command included in at least one data packet. Therefore, no additional means to achieve a delay of the digital data stream, preferably an audio and/or video data stream are required.

According to a first preferred implementation form of the second aspect, the method additionally comprises the step of converting an input signal into a digital sample stream.

According to a further preferred implementation form of the second aspect, the method additionally comprises configuring a packet transport network to provide data packet transmission between a communication switch and at least one ground radio station.

According to a further preferred implementation form of the second aspect, the method additionally comprises transmitting in regular intervals a Request for Measurement Message (RMM) to all ground radio stations with the aid of the communication switch.

According to a further preferred implementation form of the second aspect, the method additionally comprises answering with a Measurement Answer Message (MAM) to the communication switch.

According to a further preferred implementation form of the second aspect, the method additionally comprises determining the delay command based on time information for sending a Request for Measurement Message and receiving a Measurement Answer Message and/or GPS data of the communication object.

Exemplary embodiments of the invention are now further explained with regard to the drawings by way of example only and not for limitation. In the drawings
- Fig. 1: shows an embodiment a common communication between an air traffic controller and an airplane pilot, and
- Fig. 2: shows an embodiment of the transmission system according to the first aspect of the invention, and
- Fig. 3: shows an embodiment of data packet processing in the jitter buffer and the determination of an output delay (Tdl, Tdl') based on delay the command, and
- Fig. 4: shows an embodiment of a ring buffer that may be provided with the jitter buffer to allow the output of a desired digital data stream after a delay time (Tdl, Tdl') based on a delay command, and
- Fig. 5: shows an embodiment of the transmission method according to the second aspect of the invention.

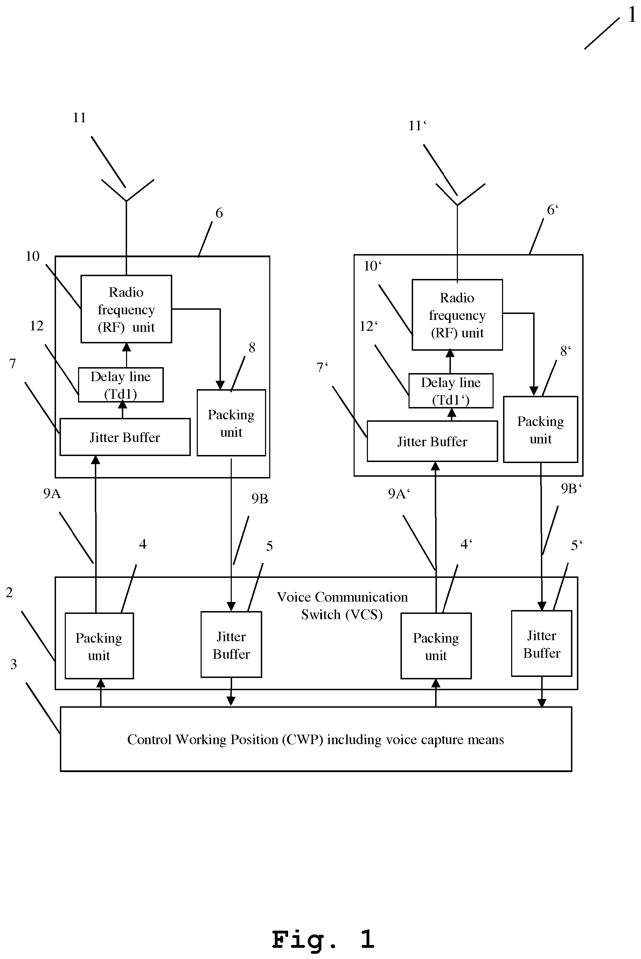

In Fig. 1, an embodiment of a transmission system for voice/speech transmission between an air traffic controller and an airplane pilot is described which is the basis for present invention. All flights according to Instrumental Flight Rules (IFR) require a constantly available speaking connection between the air traffic controller and the airplane pilot. The ground stations that transmit the speech information to the airplane and the working place of the air traffic controller (Control Working Position, (CWP)) are connected to a terrestrial Voice Communication System (VCS). The Voice Communication System connects the Control Working Positions with the appropriate ground station, so that the air traffic controller can work on the frequency related to a control sector.

Due to environmental or infrastructure constraints, some control sector coverage cannot be achieved by only one ground station. Thus, it is necessary to use simultaneously several independent ground stations operating with the same frequency. However, when two or more identical audio signals are received and demodulated with relative time delays, echo effects occur and negatively affect the quality of the communication between the air traffic controller and the airplane pilot.

According to Fig. 1, the transmission system 1 comprises a Voice Communication Switch (VCS) 2 including a packing unit 4, 4' and a jitter buffer 5, 5'. The packing unit 4, 4' and the jitter buffer 5, 5' are connected to a Control Working Position (CWP) 3. Furthermore, Fig. 1 shows a ground radio station 6, 6' including a jitter buffer 7, 7', a delay line 12, 12', a radio frequency (RF) unit 10, 10', an antenna 11, 11' and a packing unit 8, 8'. Speech information from the air traffic controller is sent via the Control Working Position (CWP) to the packing unit 4, 4' in the Voice Communication Switch 2, converted into IP packets and transmitted over a Voice over IP network 9A, 9A' to the ground radio station 6, 6'. The transmitted IP packets are received and processed by the jitter buffer 7, 7' that converts the IP packets into a digital data stream that contains the speech information from the air traffic controller.

To compensate for time delay differences in ground-ground transmission (transmission from the Control Working Position to the antennas) and thus, to ensure that several independent ground stations operating at the same frequency can be operated simultaneously without echo effects, each ground station provides a delay line 12, 12' that is connected to the output of the jitter buffer 7, 7'. Thus, the speech, respectively audio signal at the output of the jitter buffer 7, 7' is delayed via the delay line 12, 12' by a time Td1, Td1', which ensures that all ground stations start transmission at the same time or at least within a maximum defined delay. The radio frequency unit 10, 10' is connected to the output of the delay line 12, 12' and processes the received signals so that they are transmittable by the antenna 11, 11' and transmits the information via the antenna 11, 11' to the airplane.

Speech information received by the antenna 11, 11' from the airplane is processed by the radio frequency unit 10, 10' to be usable by the packing unit 8, 8' that is connected to the output of the radio frequency unit 10, 10'. The packing unit 10, 10' generates IP packets from the received data and transmits the IP packets over the Voice over IP Network 9B, 9B' to the jitter buffer 5, 5' of the Voice Communication Switch 2. The jitter buffer 5, 5', that is connected to the Control Working Position 3 receives the IP packets sent over the network 9B, 9B', generates a digital data stream from the received data and sends the said digital data stream to the Control Working Position 3. The Control Working Position 3 processes the received data stream to a speech, respectively audio signal that can be made audible by a loud-speaker or headset so that the air traffic controller can hear the transmitted information from the pilot in the airplane. No time delays in ground-ground transmission for different ground radios have to be considered for the reception side, since only one of the incoming audio signals is delivered by the Control Working Position 3 to the controller headset or loud-speaker to avoid echos.

There are several strategies for estimating a dynamic one-way network delay between a Voice Communication Switch (VCS) and ground radio stations to determine the required delay time (Tdl, Td1'). The determination of the delay time (Tdl, Tdl') is an easy task for a person skilled in the art and can for example be done with a vector network analysor a reflectometer or with an oscilloscope.

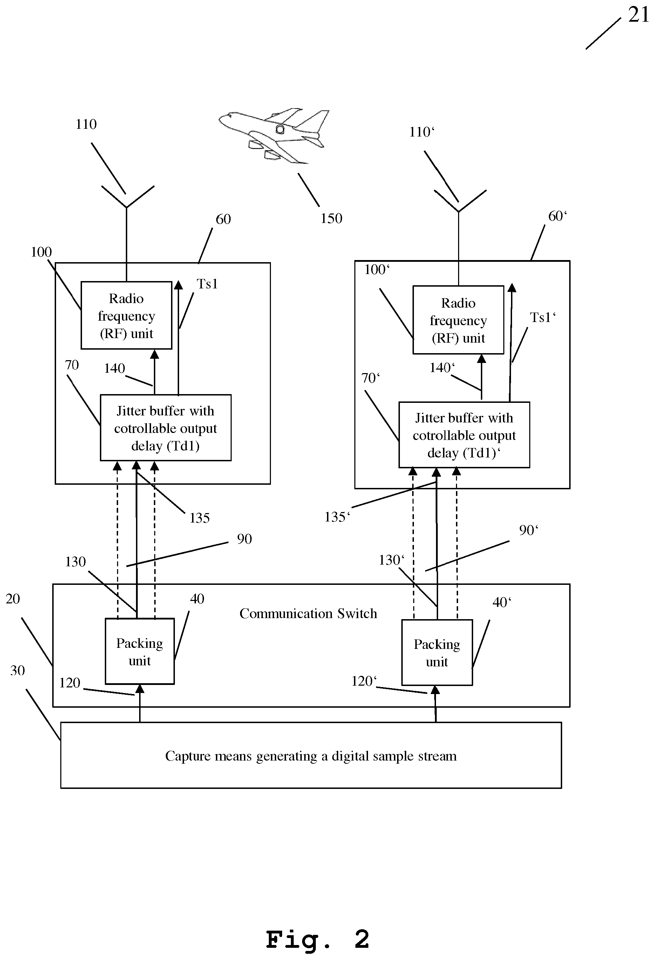

In Fig. 2, an embodiment of the transmission system 21 according to the first aspect of the invention is shown. Only the transmission path from capture means 30 to the transmitting ground radio station 60, 60', including the inventive solution to control the delay time (Tdl, Tdl') using a delay command is described, since the reception path from ground radio station to capture means is identical to the reception path already described in Fig. 1, except that the data transmitted over the data packet transport network is available for, but not limited to internet protocol (IP) packets.

The transmission system 21 according to the present invention, shown in Fig. 2, comprises capture means 30, connected to the input of a packing unit 40, 40' located in a communication switch 20. The capture means is configured to receive input signals, especially audio signals and/or video signals and to convert the said input signals into a digital sample stream 120, 120'.

The transmission system 21 further comprises the packing unit 40, 40' that receives the digital data stream 120, 120' generated by the capture means 30. The packing unit 40, 40' generates data packets from the received digital data stream 120, 120', includes a delay command into at least one of the data packets and transmits the data packets 130, 130' over a packet transport network 90, 90' configured to provide data packet transmission between the communication switch 20 and at least one ground radio station 60, 60'.

The estimation of the delay time (Tdl, Tdl') for each ground station, required to be able to compensate for delay differences that cause echos, is well known to the person skilled in the art and therefore not further explained.

In addition to the delay time information being incorporated into the delay command, the delay command includes Global Positioning System (GPS) data of the object 150 that receives the transmission.

Furthermore, the transmission system 21 comprises a ground radio station 60, 60' including a jitter buffer 70, 70' receiving the data packets 135, 135' from the communication switch 20 over the data packet transport network 90, 90'. A different referral number for the sent data packets 130, 130' and for the received data packets 135, 135' has been chosen to point out that the data packets are influenced during the transmission over the network 90, 90'. The jitter buffer 70, 70' is configured to convert the received data packets 135, 135' back into a digital data stream and to control the output timing of the said digital data stream depending on the delay command information included in at least one data packet.

Thus the jitter buffer 70, 70' outputs a digital data stream 140, 140' having a delay (Tdl, Tdl') based on the delay command.

The ground radio station 60, 60' further includes a radio frequency unit 100, 100', wherein the jitter buffer 70, 70' is connected to the radio frequency unit 100, 100' input. Said radio frequency unit 100, 100' is configured to process the received delayed digital data stream 140, 140' such, that the data can be transmitted via the transmission antenna 110, 110'.

The time delay generated by the jitter buffer 70, 70' based on the delay command is Td1, Td1'. The time delay between the output of the digital data stream 140, 140' of the jitter buffer 70, 70' and the output of the radio frequency unit 100, 100' to the antenna 110, 110' is denoted Ts1, Ts1' and is depending on the system properties of the radio frequency unit 100, 100'.

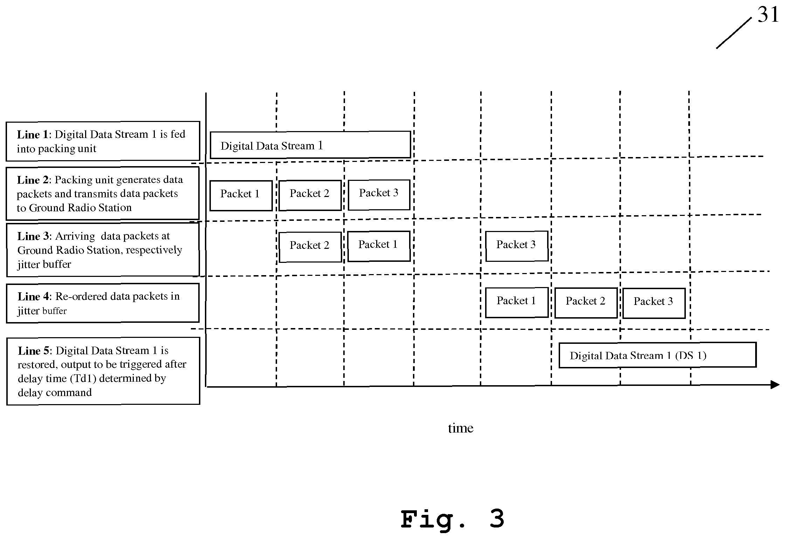

Fig. 3 shows a diagram 31 to point out that a digital data stream 1, as depicted in line 1, is converted by the packing unit 40, 40' into several data packets (in this example into packets 1 to 3) and transmitted to the ground radio station, as shown and described in line 2. The data packets are transported via a data packet transport network. The said data packets are received by the ground radio station 60, 60' by the respective jitter buffer (70, 70') and do not necessarily arrive at the same order, as they have been transmitted, as shown in line 3. Transported data packets over a data packet transporting network may be subjected to a variety of impairments such as delay, delay variation and packet loss. Thus, the jitter buffer 40, 40' has to be configured to re-order the data packets before a digital data stream can be obtained from the data packets, as depicted in line 4. The functionality of a jitter buffer receiving data packets over a network is known to the person skilled in the art and therefore not described in detail.

The drawing 31 further shows in line 5 that the digital data stream 1 is restored by the jitter buffer 70, 70' from the re-ordered data packets. To show the difference between the originally sent digital data stream 1 and the restored digital data stream, the restored digital data stream is named digital data stream 1 (DS1). The restored digital data stream is made available at the output of the jitter buffer depending on the delay command information. In other words, the digital data stream 1 (DS1) is made available inside the jitter buffer 70, 70', exemplarily a ring buffer is conceivable to fulfill this task, and said data stream 1 (DS1) is sent to the radio frequency unit based on the delay command included into at least one data packet. Thus, based on the delay command, the delay time Td1, Td1' can be adjusted.

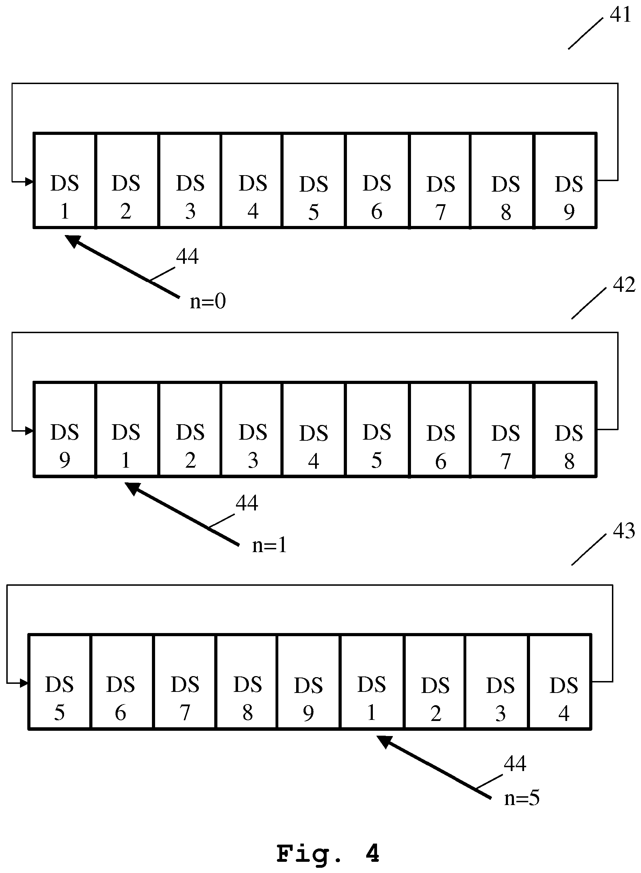

In Fig. 4, an exemplary embodiment of the time delay adjustment depending on the delay command is shown. The digital data stream 1 (DS1) restored by the jitter buffer 70, 70' may be circulating in a ring buffer until the delay command triggers the output of the digital data stream 1 (DS1). This is just an example, other implementations, known to the person skilled in the art, are conceivable to fulfill this task.

Fig. 4, shows an exemplary ring buffer at a process step n=0 (41), n=1 (42) and n=5 (43).

The digital data stream 1 (DS1) is circulating inside the ring buffer 41, 42, 43 and can be accessed by a pointer 44, pointing at the location of digital data stream (DS1) at a specific process step n or alternatively at a specific time point. Depending on the chosen process step n or the time point t, the delay time Td1, Td1' of the restored digital data stream 1 (DS1) can be adjusted. When the restored digital data stream (DS1) is accessed by the pointer 44, the information is made available at the jitter buffer output and can be received by the radio frequency unit 100, 100'.

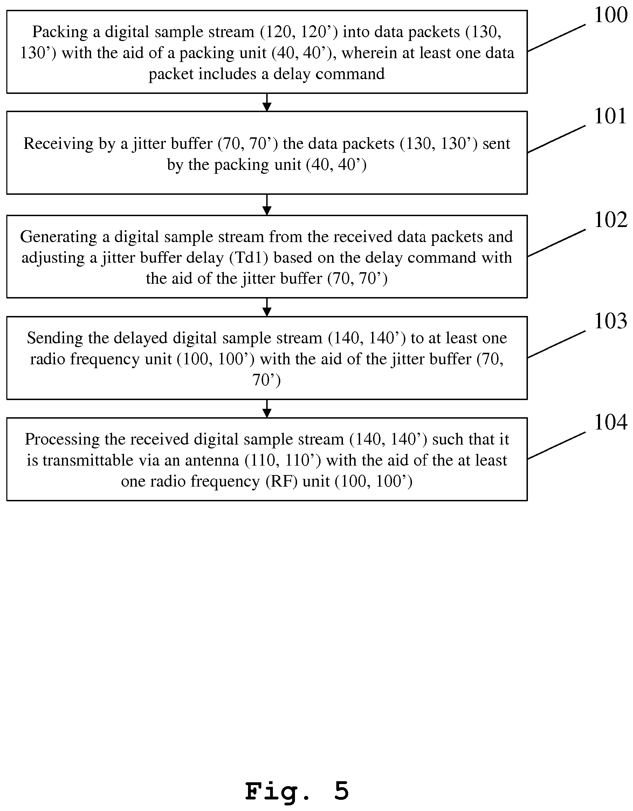

In Fig. 5, an embodiment of the transmission method according to the second aspect of the invention is shown. In a first step 100 a packing unit 40, 40' generates data packets 130, 130' from an incoming digital sample stream 120, 120', wherein at least one data packet includes a delay command. The delay command may be based on time information for sending a Request for Measurement Message and receiving a Measurement Answer Message and/or Global Positioning System (GPS) data of the communication object 150. The digital sample stream 120, 120' is preferably an audio data stream and/or a video data stream received by the packing unit 40, 40'.

In a second step 101 a jitter buffer 70, 70' is receiving the data packets 135, 135' sent by the packing unit 40, 40' .

In a third step 102 the jitter buffer 70, 70' processes the received data packets 135, 135' such that the digital sample stream 120, 120' fed into the packing unit 40, 40', converted into data packets and transmitted over the data packet transport network 90, 90', is restored. Since the incoming data packets 135, 135' are not always in the correct order and since some packets are delayed or do not even arrive at the jitter buffer 70, 70', said jitter buffer, as known to the person skilled in the art, brings the data packets into the correct order and provides feedback to the packet unit 40, 40', in case packages sent by the packing unit 40, 40', are not received, to control the re-sending of packets.

In addition to restoring the transmitted digital data stream, the jitter buffer 70, 70' delays the output of the restored digital data stream by the time Td1, Td1', which allows to compensate for delay difference between all transmitting ground stations and ensures a simultaneous transmission of all transmitting ground stations. The delay time Td1, Td1' is determined based on the delay command, that is included in at least one data packet received by the jitter buffer 70, 70'.

In a fourth step 103 the jitter buffer 70, 70' sends the digital sample stream, delayed by the delay time Td1, Td1' to at least one radio frequency unit 100, 100'.

Finally, in a fifth step 104, the radio frequency unit 100, 100' processes the received delayed digital sample stream such, that it can be transmitted via an antenna 110, 110' to the object 150 to communicate with.

The invention is not limited to the examples and especially not to specific types of devices under test. The characteristics of the exemplary embodiments can be used in any advantageous combination. The data packets preferably are IP (Internet Protocol) packets.

## Claims

1. A speech transmission system (21) with data packet transport and delay compensation, comprising:
- an air traffic control working position, CWP, comprising capture means (30),
- a voice communication switch (20) including a packing unit (40, 40'), connected to said capture means (30) and configured to convert a digital sample stream (120, 120') into data packets (130, 130'), and
- a plurality of ground radio stations (60, 60') respectively including at least one jitter buffer (70, 70') receiving the data packets transmitted from the communication switch (20), and respectively including at least one radio frequency, RF, unit (100, 100') with an antenna (110, 110'),
wherein at least one data packet (130, 130') includes a delay command, and wherein the delay command is processed in the jitter buffer (70, 70') to adjust a jitter buffer delay time (Td1), wherein the delay command is calculated based on an estimated end to end data delay between the capture means (30) and the output of the radio frequency unit (100, 100') wherein said capture means (30) are configured to convert an input signal into a digital sample stream (120, 120'),
wherein the delay command is based on Global Positioning System, GPS, data of an object (150) that shall receive the radio frequency transmission of the radio frequency unit (100, 100').

2. The system according to any of claim 1,
wherein the jitter buffer (70, 70') is configured to convert the received data packets into a received digital sample stream (140, 140').

3. The system according to claim 2,
wherein the radio frequency unit (100, 100') converts the received digital data stream (140, 140') into signals that are transmittable by the antenna (110, 110').

4. The system according to any of claims 1 to 3,
wherein the system comprises a packet transport network (90, 90') configured to provide data packet transmission between the communication switch (20) and at least one ground radio station (60, 60').

5. The system according to claim 4,
wherein the packet transport network (90, 90') uses an internet protocol and/or wherein the digital sample stream (120, 120') comprises sampled voice and/or video data.

6. The system according to any of claims 1 to 5,
wherein the sum of the jitter buffer delay time (Tdl, Tdl') and the delay time (Ts1, Ts1') which a signal experiences between the output of the jitter buffer (70, 70') and the antenna (110, 110'), is constant for each ground radio station (60, 60').

7. A method for speech transmission with data packet transport and delay compensation between a communication switch and ground radio stations, the method comprising the steps of:
packing, via a voice communication switch, a digital sample stream (120, 120') from capture means of an air traffic control working position, CWP, (3) into data packets (130, 130') with the aid of a packing unit (40, 40') located inside a communication switch (20), wherein at least one data packet (130, 130') includes a delay command which is calculated based on an estimated end to end data delay between the capture means (30) and the output of a radio frequency unit (100, 100');
receiving the data packets (135, 135') sent by the packing unit (40, 40') by respectively a jitter buffer (70, 70') located in a at least two ground radio station (60, 60'),
generating a digital sample stream (140, 140') from the received data packets (135, 135') and adjusting a jitter buffer delay (Tdl) based on the delay command with the aid of the jitter buffer (70, 70';
sending the delayed digital sample stream to respectively one radio frequency, RF, unit (100, 100') with the aid of the jitter buffer (70, 70'), and
processing the received digital sample stream (140, 140') and transmitting it via an antenna (110, 110') with the aid of the at least one radio frequency, RF, unit (100, 100'),
wherein the delay command is based on Global Positioning System, GPS, data of an object (150) that shall receive the radio frequency transmission of the radio frequency unit (100, 100').

8. The method according to claim 7,
wherein the method further comprises the step of converting an input signal into a digital sample stream (120, 120') with the aid of said capture means (30).

9. The method according to claim 7 or 8,
wherein the method further comprises the step of configuring a packet transport network (90, 90') to provide data packet transmission between a communication switch (20) and at least one ground radio station (60, 60').

10. The method according to any of claims 7 to 9,
wherein the method further comprises the step of transmitting in regular intervals a Request for Measurement Message, RMM, to all ground radio stations (60, 60') with the aid of the communication switch (20).

11. The method according to any of claims 7 to 10,
wherein the method further comprises the step of answering with a Measurement Answer Message, MAM, to the communication switch (20).

12. The method according to any of claims 7 to 11,
wherein the method further comprises the step of determining the delay command based on time information for sending a Request for Measurement Message and receiving a Measurement Answer Message and/or location data GPS of the communication object (150).

## Patentansprüche

1. Sprachübertragungssystem (21) mit Datenpakettransport und Verzögerungskompensation, das Folgendes umfasst:
- eine Luftverkehrssteuerungsarbeitsposition, CWP, die ein Erfassungsmittel (30) umfasst,
- einen Sprachkommunikationsschalter (20), der eine Packeinheit (40, 40') beinhaltet, die mit dem Erfassungsmittel (30) verbunden und dazu ausgelegt ist, einen digitalen Abtaststrom (120, 120') in Datenpakete (130, 130') umzuwandeln, und
- eine Vielzahl von Bodenfunkstationen (60, 60'), die jeweils mindestens einen Jitterpuffer (70, 70') beinhalten, der die Datenpakete empfängt, die vom Kommunikationsschalter (20) übertragen werden, und jeweils mindestens eine Funkfrequenz(RF)-Einheit (100, 100') mit einer Antenne (110, 110') beinhalten,
wobei mindestens ein Datenpaket (130, 130') einen Verzögerungsbefehl beinhaltet und wobei der Verzögerungsbefehl im Jitterpuffer (70, 70') verarbeitet wird, um eine Jitterpufferverzögerungszeit (Tdl) anzupassen,
wobei der Verzögerungsbefehl auf Basis einer geschätzten Ende-zu-Ende-Datenverzögerung zwischen dem Erfassungsmittel (30) und dem Ausgang der Funkfrequenzeinheit (100, 100') berechnet wird
wobei das Erfassungsmittel (30) dazu ausgelegt ist, ein Eingangssignal in einen digitalen Abtaststrom (120, 120') umzuwandeln,
wobei der Verzögerungsbefehl auf globalen Positionsbestimmungssystem(GPS)-Daten eines Objekts (150) basiert, das die Funkfrequenzübertragung der Funkfrequenzeinheit (100, 100') empfangen soll.

2. System nach Anspruch 1,
wobei der Jitterpuffer (70, 70') dazu ausgelegt ist, die empfangenen Datenpakete in einen empfangenen digitalen Abtaststrom (140, 140') umzuwandeln.

3. System nach Anspruch 2,
wobei die Funkfrequenzeinheit (100, 100') den empfangenen digitalen Datenstrom (140, 140') in Signale umwandelt, die von der Antenne (110, 110') übertragbar sind.

4. System nach einem der Ansprüche 1 bis 3,
wobei das System ein Pakettransportnetzwerk (90, 90') umfasst, das dazu ausgelegt ist, zwischen dem Kommunikationsschalter (20) und mindestens einer Bodenfunkstation (60, 60') eine Datenpaketübertragung bereitzustellen.

5. System nach Anspruch 4,
wobei das Pakettransportnetzwerk (90, 90') ein Internetprotokoll verwendet und/oder
wobei der digitale Abtaststrom (120, 120') abgetastete Sprach- und/oder Videodaten umfasst.

6. System nach einem der Ansprüche 1 bis 5,
wobei die Summe der Jitterpufferverzögerungszeit (Tdl, Tdl') und der Verzögerungszeit (Ts1, Ts1), die ein Signal zwischen dem Ausgang des Jitterpuffers (70, 70') und der Antenne (110, 110') erfährt, für jede Bodenfunkstation (60, 60') konstant ist.

7. Verfahren zur Sprachübertragung mit Datenpakettransport und Verzögerungskompensation zwischen einem Kommunikationsschalter und Bodenfunkstationen, wobei das Verfahren die folgenden Schritte umfasst:
Packen eines digitalen Abtaststroms (120, 120') von einem Erfassungsmittel einer Luftverkehrssteuerungsarbeitsposition, CWP, (3) mithilfe einer Packeinheit (40, 40'), die sich in einem Kommunikationsschalter (20) befindet, via einen Sprachkommunikationsschalter in Datenpakete (130, 130'), wobei mindestens ein Datenpaket (130, 130') einen Verzögerungsbefehl beinhaltet, der auf Basis einer geschätzten Ende-zu-Ende-Datenverzögerung zwischen dem Erfassungsmittel (30) und dem Ausgang einer Funkfrequenzeinheit (100, 100') berechnet wird;
Empfangen der Datenpakete (135, 135'), die von der Packeinheit (40, 40') gesendet werden, durch jeweils einen Jitterpuffer (70, 70'), die sich in mindestens zwei Bodenfunkstation (60, 60') befinden,
Erzeugen eines digitalen Abtaststroms (140, 140') aus den empfangenen Datenpaketen (135, 135') und Anpassen einer Jitterpufferverzögerung (Tdl) mithilfe des Jitterpuffers (70, 70') auf Basis des Verzögerungsbefehls;
Senden des verzögerten digitalen Abtaststroms mithilfe des Jitterpuffers (70, 70') an jeweils eine Funkfrequenz(RF)-Einheit (100, 100') und
Verarbeiten des empfangenen digitalen Abtaststroms (140, 140') und Übertragen desselben über eine Antenne (110, 110') mithilfe der mindestens einen Funkfrequenz (RF) - Einheit (100, 100'),
wobei der Verzögerungsbefehl auf globalen Positionsbestimmungssystem (GPS) -Daten eines Objekts (150) basiert, das die Funkfrequenzübertragung der Funkfrequenzeinheit (100, 100') empfangen soll.

8. Verfahren nach Anspruch 7,
wobei das Verfahren ferner den Schritt des Umwandelns eines Eingangssignals mithilfe des Erfassungsmittels (30) in einen digitalen Abtaststrom (120, 120') umfasst.

9. Verfahren nach Anspruch 7 oder 8,
wobei das Verfahren ferner den Schritt des Auslegens eines Pakettransportnetzwerks (90, 90') umfasst, um zwischen einem Kommunikationsschalter (20) und mindestens einer Bodenfunkstation (60, 60') eine Datenpaketübertragung bereitzustellen.

10. Verfahren nach einem der Ansprüche 7 bis 9,
wobei das Verfahren ferner den Schritt des Übertragens einer Messanforderungsnachricht, RMM, mithilfe des Kommunikationsschalters (20) in regelmäßigen Intervallen zu allen Bodenfunkstationen (60, 60') umfasst.

11. Verfahren nach einem der Ansprüche 7 bis 10,
wobei das Verfahren ferner den Schritt des Antwortens mit einer Messantwortnachricht, MAM, an den Kommunikationsschalter (20) umfasst.

12. Verfahren nach einem der Ansprüche 7 bis 11,
wobei das Verfahren ferner den Schritt des Bestimmens des Verzögerungsbefehls auf Basis von Zeitinformationen zum Senden einer Messanforderungsnachricht und Empfangen einer Messantwortnachricht und/oder von GPS-Standortdaten des Kommunikationsobjekts (150) umfasst.

## Revendications

1. Système de transmission de la parole (21) avec transport de paquets de données et compensation de retard, comprenant :
- une position de travail de contrôle de trafic aérien, CWP, comprenant des moyens de capture (30),
- un commutateur de communication vocale (20) comportant une unité de condensation (40, 40') connectée auxdits moyens de capture (30) et configurée pour convertir un flux d'échantillons numériques (120, 120') en paquets de données (130, 130'), et
- une pluralité de stations radio terrestres (60, 60') comportant respectivement au moins un tampon de gigue (70, 70') recevant les paquets de données transmis par le commutateur de communication (20), et comportant respectivement au moins une unité de radiofréquence, RF, (100, 100') avec une antenne (110, 110'),
dans lequel au moins un paquet de données (130, 130') comporte une commande de retard, et dans lequel la commande de retard est traitée dans le tampon de gigue (70, 70') pour régler un temps de retard de tampon de gigue (Td1),
dans lequel la commande de retard est calculée sur la base d'un retard de données estimé de bout en bout entre les moyens de capture (30) et la sortie de l'unité de radiofréquence (100, 100'),
dans lequel lesdits moyens de capture (30) sont configurés pour convertir un signal d'entrée en un flux d'échantillons numériques (120, 120'),
dans lequel la commande de retard est basée sur des données de système mondial de localisation, GPS, d'un objet (150) qui doit recevoir la transmission radiofréquence de l'unité de radiofréquence (100, 100').

2. Système selon la revendication 1,
dans lequel le tampon de gigue (70, 70') est configuré pour convertir les paquets de données reçus en un flux d'échantillons numériques reçu (140, 140')

3. Système selon la revendication 2,
dans lequel l'unité de radiofréquence (100, 100') convertit le flux de données numériques reçu (140, 140') en signaux qui sont transmissibles par l'antenne (110, 110').

4. Système selon l'une quelconque des revendications 1 à 3,
dans lequel le système comprend un réseau de transport de paquets (90, 90') configuré pour assurer la transmission de paquets de données entre le commutateur de communication (20) et au moins une station radio terrestre (60, 60').

5. Système selon la revendication 4,
dans lequel le réseau de transport de paquets (90, 90') utilise un protocole internet et/ou
dans lequel le flux d'échantillons numériques (120, 120') comprend des données vocales et/ou vidéo échantillonnées.

6. Système selon l'une quelconque des revendications 1 à 5,
dans lequel la somme du temps de retard de tampon de gigue (Tdl, Tdl') et du temps de retard (Ts1, Ts1') que subit un signal entre la sortie du tampon de gigue (70, 70') et l'antenne (110, 110') est constante pour chaque station radio terrestre (60, 60').

7. Procédé de transmission de la parole avec transport de paquets de données et compensation de retard entre un commutateur de communication et des stations radio terrestres, le procédé comprenant les étapes consistant à :
condenser, via un commutateur de communication vocale, un flux d'échantillons numériques (120, 120') provenant de moyens de capture d'une position de travail de contrôle de trafic aérien, CWP, (3) en paquets de données (130, 130') à l'aide d'une unité de condensation (40, 40') située à l'intérieur d'un commutateur de communication (20), dans lequel au moins un paquet de données (130, 130') comporte une commande de retard qui est calculée sur la base d'un retard de données estimé de bout en bout entre les moyens de capture (30) et la sortie d'une unité de radiofréquence (100, 100') ;
recevoir les paquets de données (135, 135') envoyés par l'unité de condensation (40, 40'), respectivement par un tampon de gigue (70, 70') situé dans au moins deux stations radio terrestre (60, 60'),
générer un flux d'échantillons numériques (140, 140') à partir des paquets de données reçus (135, 135') et régler un retard de tampon de gigue (Tdl) sur la base de la commande de retard à l'aide du tampon de gigue (70, 70') ;
envoyer respectivement le flux d'échantillons numériques retardé à une unité de radiofréquence, RF, (100, 100') à l'aide du tampon de gigue (70, 70'), et
traiter le flux d'échantillons numériques reçu (140, 140') et le transmettre par l'intermédiaire d'une antenne (110, 110') à l'aide de l'au moins une unité radiofréquence, RF, (100, 100'),
dans lequel la commande de retard est basée sur les données de localisation GPS d'un objet (150) qui doit recevoir la transmission radiofréquence de l'unité radiofréquence (100, 100').

8. Procédé selon la revendication 7,
dans lequel le procédé comprend en outre l'étape consistant à convertir un signal d'entrée en un flux d'échantillons numériques (120, 120') à l'aide desdits moyens de capture (30).

9. Procédé selon la revendication 7 ou 8,
dans lequel le procédé comprend en outre l'étape consistant à configurer un réseau de transport de paquets (90, 90') pour assurer la transmission de paquets de données entre un commutateur de communication (20) et au moins une station radio terrestre (60, 60').

10. Procédé selon l'une quelconque des revendications 7 à 9,
dans lequel le procédé comprend en outre l'étape consistant à transmettre à intervalles réguliers un message de demande de mesure, RMM, à toutes les stations radio terrestres (60, 60') à l'aide du commutateur de communication (20).

11. Procédé selon l'une quelconque des revendications 7 à 10,
dans lequel le procédé comprend en outre l'étape consistant à répondre avec un message de réponse de mesure, MAM, au commutateur de communication (20).

12. Procédé selon l'une quelconque des revendications 7 à 11,
dans lequel le procédé comprend en outre l'étape consistant à déterminer la commande de retard sur la base d'informations de temps pour envoyer un message de demande de mesure et à recevoir un message de réponse de mesure et/ou des données de localisation GPS de l'objet de communication (150).
